# EUROPEAN PATENT APPLICATION

(11) **EP 3 305 738 A1**
(43) Date of publication of application: **11.04.2018**
(21) Application number: 16192653.0
(22) Date of filing: 06.10.2016
(51) Int. Cl.: C04B 18/16, C04B 28/04, C04B 20/02

(54) **METHOD FOR COMMINUTING CURED FIBER CEMENT MATERIAL AND METHOD FOR THE PRODUCTION OF FIBER CEMENT PRODUCT COMPRISING RECYCLED CURED FIBER CEMENT POWDER**

(71) Applicant: ETEX SERVICES NV, 1880 Kapelle-op-den-Bos (BE)
(72) Inventor: VAN DER HEYDEN, Luc, 3190 Boortmeerbeek (BE)
(74) Representative: Vaeck, Elke

(57) **Abstract**

The present invention relates to fiber cement products. More specifically, the present invention relates to methods for the production of comminuted fiber cement material starting from cured fiber cement products by using a pendular mill. In addition, the present invention relates to the further use of the produced comminuted fiber cement material for the production of fresh fiber cement products comprising the comminuted cured fiber cement material.

## Description

### Field of the invention

The present invention relates to fiber cement products. More specifically, the present invention relates to methods for the production of comminuted fiber cement material starting from cured fiber cement products. In addition, the present invention relates to the further use of the produced comminuted fiber cement material for the production of fresh fiber cement products comprising the comminuted cured fiber cement material.

### Background of the invention

Fiber cement material is a composite material typically comprising cement, cellulose fibers, and at least one of silica sand, synthetic fibers and fillers. It is widely used in construction and can take the form of a plurality of products, such as for example corrugated sheets for roofs, small sheets for tiles (slates), sheets for sidings, cladding, boards, etc.

Cured fiber cement waste material has a chemical composition similar to the corresponding fresh fiber cement products from which the waste is derived, and therefore could, and ideally should, be recycled and reused. Prior art patent documents US20080168927 and US20080072796 relate to methods for recycling fiber cement material waste.
However, recycling waste material from cured fiber cement products, e.g. finished products being out of spec, demolition and/or construction waste and alike, is a major challenge.
In fact, from the known fiber cement waste recycling methods, it appears that it is very difficult to convert cured fiber cement products to a fiber cement powder, which is has a suitable morphology for further use in the production of new fresh fiber cement products. Indeed, known methods for producing comminuted fiber cement material from cured fiber cement waste result in the production of a powder with a fluffy and wool-like appearance. Such a bulky, fluffy and wool-like powder material cannot be suitably densified and compacted, and therefore cannot be used as a substitute for the normally used fresh cementitious material, filler material and/or siliceous material in fresh fiber cement products.

### Summary of the invention

It is therefore an object of the present invention to provide novel and improved methods for the production of comminuted fiber cement material starting from cured fiber cement waste, wherein the comminuted fiber cement material has a suitable morphology to be used as a starting material in the production of new fresh fiber cement products.

It is a further object of the present invention to provide novel and improved methods for the production of fresh fiber cement products comprising the comminuted cured fiber cement material.

As described above, any attempts in the past to produce fiber cement powder from cured fiber cement waste resulted in a material having a bulky, fluffy and wool-like consistency. Such a fuzzy material could not be used as a substitute for the normally used fresh cementitious material, filler material and/or siliceous material in fresh fiber cement products. Indeed, methods for producing fresh fiber cement materials, such as but not limited to the Hatschek production process, inherently require the starting material to be densified and pressed to a dry and compact product with a high mechanical strength.

The present inventors have now found a method to produce comminuted fiber cement material from cured fiber cement waste, which can advantageously be used for the further production of fresh fiber cement products.

Moreover, the fresh fiber cement products comprising the comminuted fiber cement material produced according to the methods of the present invention, have at least the same or even improved physical and mechanical properties (i.e. density, water absorption, mechanical strength etc.) compared to fresh fiber cement products not comprising the comminuted fiber cement material.

In particular, it was found that the critical factor in the methods of the present invention for producing suitable comminuted fiber cement powder from cured fiber cement waste is the use of a pendular mill. In fact, when using a pendular mill, cured fiber cement waste is squashed (i.e. flattened) in such a specific way that the resulting fiber cement powder has a particle size distribution, which is the same as or similar to the particle size distribution of fresh cementitious binder material and/or, as the case may be, fresh ground siliceous material (such as e.g. sand) and/or fresh ground filler material (such as e.g. limestone).
It was proven by the present inventors that this resulting comminuted material is ideal for the production of fresh fiber cement products, having physical end mechanical properties (i.e. density, water absorption, mechanical strength etc.) comparable to or even better than fiber cement products not comprising any comminuted waste fiber cement material.

In a first aspect, the present invention provides methods for the production of comminuted cured fiber cement material, comprising at least the step of comminuting cured fiber cement material using a pendular mill.

The comminuted cured fiber cement material is typically waste material, e.g. demolition waste, production waste from the fiber cement production plant, waste from the construction sites or rejected fiber cement products. The comminuted cured fiber cement material, typically in form of cured fiber cement powder, can be used as raw material for fresh air-cured or fresh autoclave-cured fiber cement material, in which the cured fiber cement powder is recycled.

In particular embodiments, the methods for the production of comminuted cured fiber cement material further comprise the step of drying the cured fiber cement material during comminuting in the pendular mill. In further particular embodiments, the step of drying the cured fiber cement material during comminuting in the pendular mill is performed by injecting hot air in the pendular mill during comminuting. In still further particular embodiments, the hot air is preferably at a temperature of at least about 20°C, such as between about 20°C and about 100°C, in particular between about 25°C and about 90°C, more in particular between about 30°C and about 80°C.

In particular embodiments, the cured fiber cement material for use as a starting material for the production of comminuted cured fiber cement material has a water content of less than or equal to about 10%w. In further particular embodiments, the cured fiber cement material for use as a starting material for the production of comminuted cured fiber cement material has a water content of less than or equal to about 10 %w, such as less than or equal to about 8%w, for example less than or equal to about 6%w, such as less than or equal to about 5%w.

In certain particular embodiments, the cured fiber cement material for use as a starting material for the production of comminuted cured fiber cement material can be air-cured fiber cement material or can be autoclave-cured.

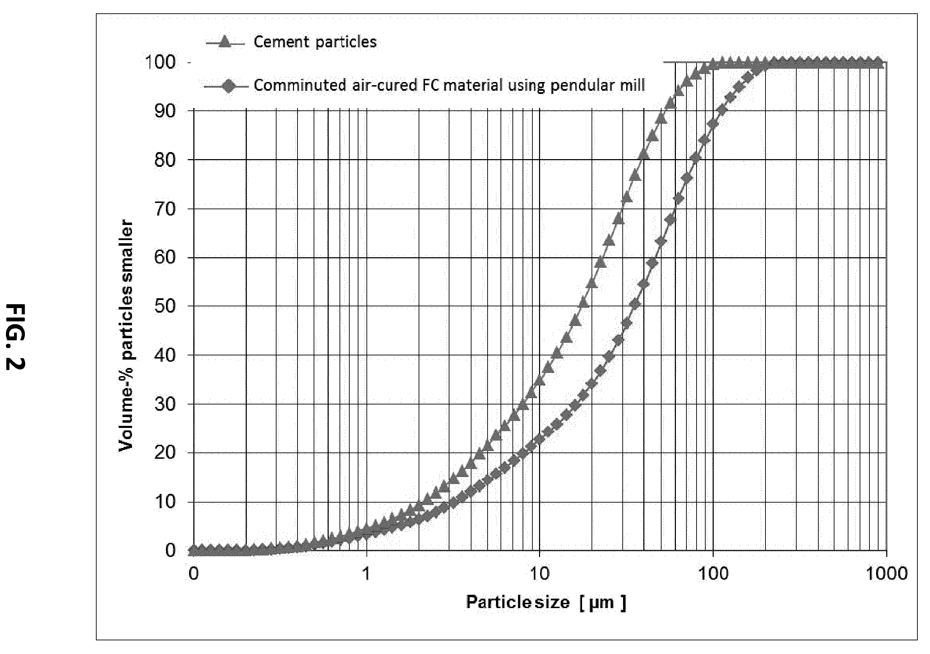

In a second aspect, the present invention provides cured fiber cement powder obtained by comminuting cured fiber cement material according to the methods of the present invention. In particular embodiments, the comminuted cured fiber cement powder according to the present invention has a particle size distribution as shown for example in Figures 2 to 5. As can be derived from the Figures 2 to 5, the particle distribution is similar to that of the standard starting materials to produce fiber cement, e.g. cementitious particles, ground silica particles and/or ground lime particles.

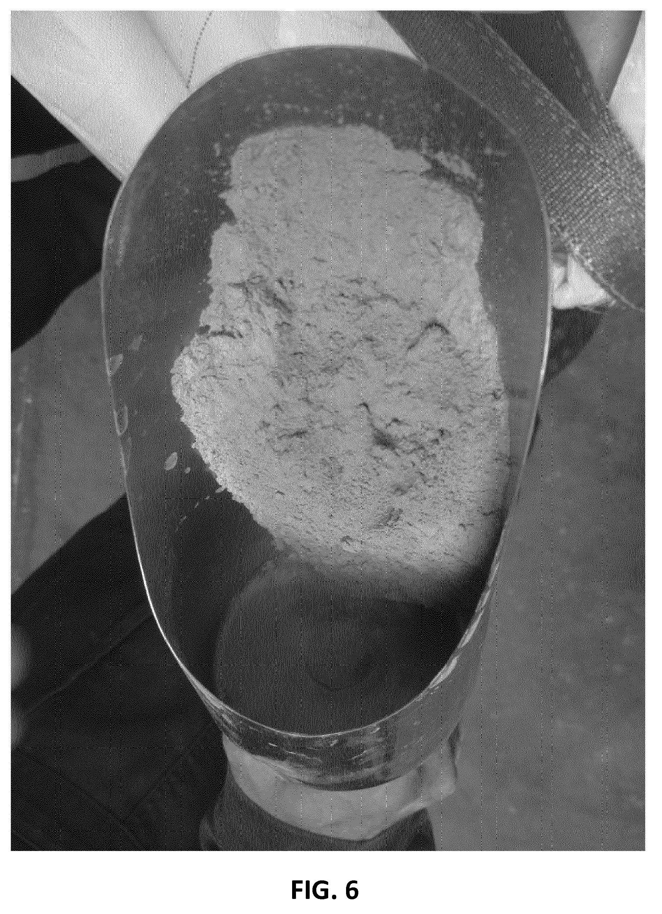

Furthermore, and even more importantly, the morphology of the particles of the comminuted fiber cement powder as obtained by the methods of the invention is similar to that of the standard fresh starting materials that are commonly used to produce fiber cement, e.g. cementitious particles, ground silica particles and/or ground filler material, such as ground lime (see Figure 6). In this way, the comminuted fiber cement powder as obtained by the methods of the invention has a flowing behavior that is similar to the flowing behavior of cementitious powder, silica flour or limestone flour (see e.g. Figure 6).
This morphology characteristic of the comminuted fiber cement powder as obtained by the methods of the invention is in contrast with the consistency of comminuted fiber cement waste powder as obtained with the known comminution methods in the past, which powder was characterized by a wool-like fluffy appearance and therefore could not be processed into a fresh fiber cement product.

In particular embodiments, the comminuted powder as produced by the methods according to the present invention is specifically characterized by a bulk density (as defined herein) of between about 1000 kg/m³ and about 1600 kg/m³, and preferably between about 1000 kg/m³ and about 1300 kg/m³. This bulk density characteristic allows the comminuted powder, as produced by the methods of the invention, to be used and thus recycled in the production of fresh fiber cement products, which products have physical and mechanical properties that are similar or even better than fresh fiber cement products made from fresh starting materials and not containing such powder.

In a third aspect, the present invention provides methods for making fiber cement products comprising recycled cured fiber cement powder, the methods at least comprising the steps of:
(a) Providing cured fiber cement powder obtained by comminuting cured fiber cement material using a pendular mill;
(b) Providing a fiber cement slurry by mixing at least the cured fiber cement powder of step (a) with cement, water and fibers, being synthetic organic fibers, natural organic fibers and/or synthetic inorganic fibers;
(c) Shaping the fiber cement slurry into an uncured fiber cement product; and
(d) Curing the uncured fiber cement product.

The produced cured fiber cement powder particles of the invention have a particle size distribution, which is similar to the particle size distribution of a cementitious binder material (e.g. cement) or a siliceous source (e.g. sand or quartz) or a filler material (e.g. CaCO₃). In particular embodiments, the produced cured fiber cement powder particles are characterized by a particle size distribution, which is similar to the particle size distribution of cement (see for example Fig. 2 and 3). In particular embodiments, the produced cured fiber cement powder particles are characterized by a particle size distribution, which is similar to the particle size distribution of a siliceous source (see for example Fig. 4 and 5).
One of the most important advantages of the comminuted fiber cement powder as produced according to the methods of the invention is that the particles have a granulated, sand-like texture and have a flowing behavior that is similar to the flowing behavior and the bulk density (as defined herein) of cementitious powder, silica flour or limestone flour. In particular embodiments, the comminuted powder as produced by the methods according to the present invention is specifically characterized by a bulk density 1000 kg/m³ and 1600 kg/m³, and preferably between 1000 kg/m³ and 1300 kg/m³.

In this way, the powder is suitable to be recycled into fresh fiber cement products, without the necessity to make major changes in the production process (e.g. the Hatschek process) for producing fresh cured fiber cement products, i.e. either air-cured or autoclave-cured fiber cement products.

Accordingly, the comminuted fiber cement powder according to the invention can directly be used in fiber cement slurry and results in fresh high-quality fiber cement products. In particular embodiments, such fiber cement slurry comprises between about 5M% and about 40M% of cured fiber cement powder produced according to the methods of the invention. In further particular embodiments, such fiber cement slurry comprises between about 5M% and about 30M% of cured fiber cement powder produced according to the methods of the invention, such as between about 5M% and about 15M% of cured fiber cement powder. In yet further particular embodiments, such fiber cement slurry comprises less than about 15M% of cured fiber cement powder produced according to the methods of the invention, such as less than about 10M% of cured fiber cement powder, more preferably less than about 5M% of cured fiber cement powder. In respect of the above, the unit "M%" refers to the mass percentage of the component over the total dry mass of the composition, i.e. all components except free water.

The cured fiber cement powder may replace part of the cement, which is typically used to produce fresh autoclave-cured or air-cured fiber cement material, and/or may replace part of the siliceous source (e.g. part of the ground sand) typically used to produce autoclave-cured fiber cement products, and/or may replace part of the fillers (e.g. ground lime or limestone) typically used to produce autoclave-cured or air-cured fiber cement products.

The fresh fiber cement materials or products, made out of fiber cement slurry comprising a certain amount of the comminuted fiber cement powder obtained by the methods of the present invention, are shaped into a so-called green fiber cement product, and thereafter cured.

Dependent to some extent on the curing process used, the fiber cement slurry typically comprises without any limitation water, process or reinforcing fibers which both may be natural organic fibers (typically cellulose fibers) and synthetic organic fibers (polyvinylalcohol, polyacrilonitrile, polypropylene, polyamide, polyester, polycarbonate, polyethylene, etc.), which fibers may be surface treated (chemically or mechanically) or not, synthetic inorganic fibers, such as glass fibers, cement e.g. Portland cement, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, anti-foaming agents, flocculants, and other additives such as hydrophobation agents or water repellants. Optionally, a color additive (e.g. pigments) can be added in order to obtain a fiber cement product which is so-called colored in the mass.
The green fiber cement product is cured, typically by curing to ambient conditions, with an optional initial curing under increased temperature (air cured fiber cement products) or under pressure in presence of steam, such as saturated steam, and increased temperature (autoclave-cured or hydrothermally cured). For autoclave-cured products, typically sand is added in the fiber cement slurry. The autoclave-curing typically results in the presence of 11.3 Å (Angstrom) Tobermorite in the fiber cement product.

Fiber cement products, also referred to as fiber cement sheets or fiber cement panels, usually are made using the well known Hatschek-process, flow-on process or Magnani-process, or combinations thereof.

The fiber cement product may be obtained by first providing a green fiber cement product, which is subjected to compression, before curing, i.e. by air curing or autoclave curing.

The "green" fiber cement product, after being made by the Hatschek-process, may be first pre-cured to the air, after which the pre-cured product is further air cured until it has its final strength, or autoclave cured using pressure and steam, to give the product its final properties.

A typical property is thickness of the product, which may vary from 4mm to 20mm, such as from 7.0 mm to 13.0 mm. The density of the final product may vary from 0.5 kg/dm³ to 2.2 kg/dm³, such as from 0.6 kg/dm³ to 2.0 kg/dm³. The dimensions of the product, next to the thickness, may vary from about 1 meter to about 1.7 meter in width and 1 meter to 3.6 meter in length.

The cured fiber cement material used in this invention may be obtained using these very same production techniques, and comprising the same or similar components.
The cured fiber cement powder as produced by the methods according to the present invention for use in fresh air-cured fiber cement products preferably, though not necessarily, is air-cured comminuted fiber cement powder. The cured fiber cement powder as produced by the methods according to the present invention for use in fresh autoclave-cured fiber cement products may be air-cured comminuted fiber cement powder or autoclave-cured comminuted fiber cement powder.

In particular embodiments of the methods for producing fiber cement products according to the invention, the fiber cement products can be made via the Hatschek process. It is an advantage of these particular embodiments of the invention that the Hatschek process can be implemented in these methods of recycling and producing fiber cement products. This is due to certain specific characteristics of the comminuted powder as produced by the methods of the present invention, including:
- The fact that the particle size distribution of the cured fiber cement powder is similar to the particle size distribution of that of the standard fresh starting materials that are commonly used to produce fiber cement, e.g. cementitious particles, ground silica particles, such as ground sand, and/or ground filler material, such as ground lime or ground limestone.
- The fact that the morphology of the particles of the comminuted fiber cement powder as obtained by the methods of the invention is similar to that of the standard fresh starting materials that are commonly used to produce fiber cement, e.g. cementitious particles, ground silica particles and/or ground filler material, such as ground lime.
- The fact that the comminuted powder as produced by the methods according to the present invention is specifically characterized by a bulk density between about 1000 kg/m³ and about 1600 kg/m³, and preferably between about 1000 kg/m³ and about 1300 kg/m³.

In particular embodiments of the methods for producing fiber cement products according to the invention, the fiber cement products are made starting from fiber cement material comprising air-cured fiber cement waste powder or autoclave-cured fiber cement waste powder or a mixture of both.

In certain particular embodiments of the methods for producing fiber cement products according to the invention, step (d) of curing the uncured fiber cement product comprises air-curing the uncured fiber cement product. It is an advantage of embodiments of the present invention that the resulting fiber cement is suitable for the production of corrugated sheets such as for roof coverings, flat sheets, slates, boards and other products.

In certain other particular embodiments of the methods for producing fiber cement products according to the invention, step (d) of curing the uncured fiber cement product comprises autoclave-curing the uncured fiber cement product. It is an advantage of embodiments of the present invention that the resulting fiber cement is suitable for the production of siding planks, sidings and other products.

In a further aspect, the present invention provides fiber cement products obtained using the methods according to the present invention.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

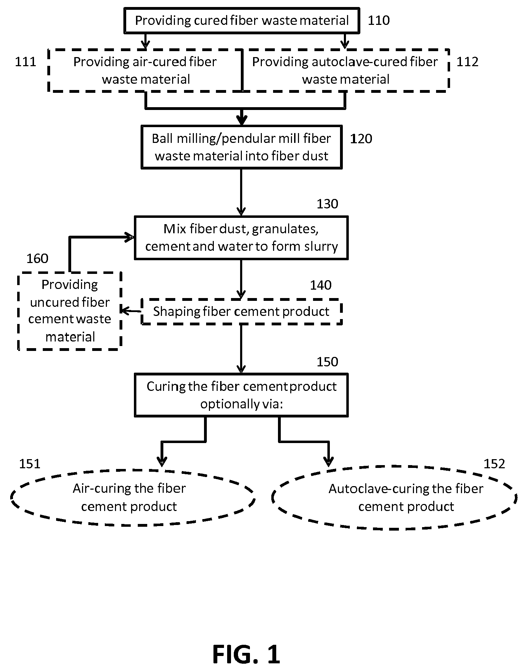

**Figure 1** is a schematic representation of the processes according to particular embodiments of the present invention.
**Figure 2** shows the particle size distribution curves of cement particles and of comminuted fiber cement powder as produced by the methods according to the present invention. Cement samples as well as air-cured fiber cement slate samples were each milled using a pendular mill type roller mill of the Poittemill Group (FR). The particle size distribution was then measured for both types of samples via laser beam diffraction in dry dispersion at 3 bar with a Malvern MasterSizer 2000. Figure 2 shows the volume percentage of smaller particles in function of the particle size.

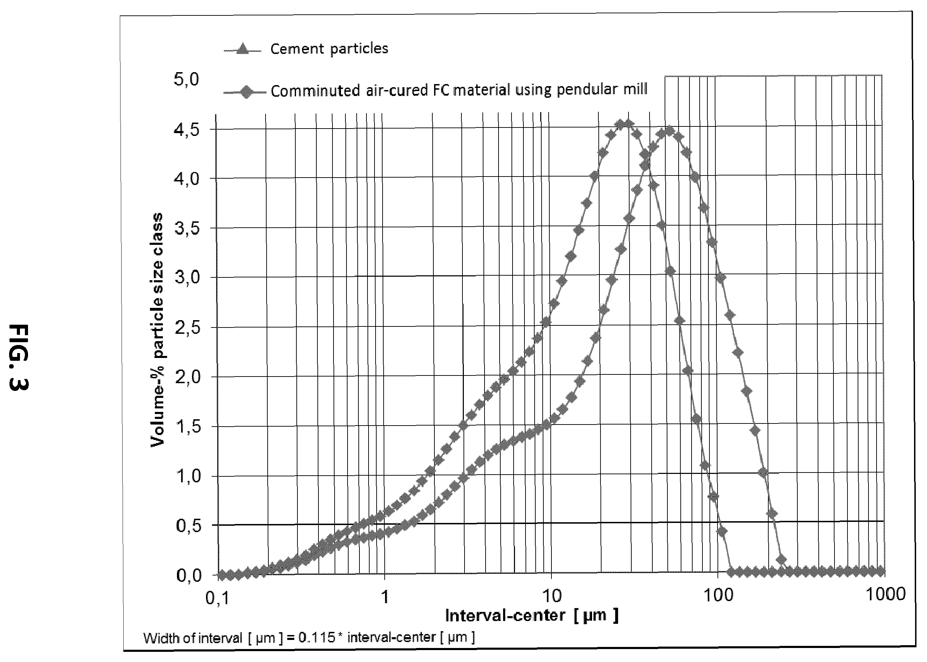

**Figure 3** shows the particle size distribution curves of cement particles and of comminuted fiber cement powder as produced by the methods according to the present invention. Cement samples as well as air-cured fiber cement slate samples were each milled using a pendular mill type roller mill of the Poittemill Group (FR). The particle size distribution was then measured for both types of samples via laser beam diffraction in dry dispersion at 3 bar with a Malvern MasterSizer 2000. Figure 3 shows the volume percentage of particles in function of the particle size class.

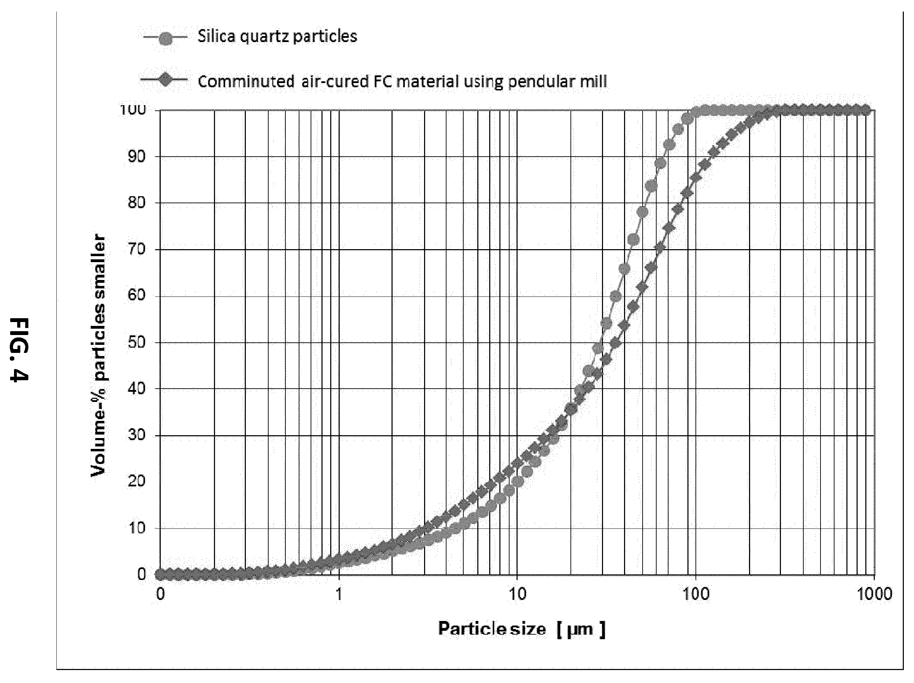

**Figure 4** shows the particle size distribution curves of silica quartz particles and of comminuted fiber cement powder as produced by the methods according to the present invention. Silica quartz samples as well as air-cured fiber cement slate samples were each milled using a pendular mill type roller mill of the Poittemill Group (FR). The particle size distribution was then measured for both types of samples via laser beam diffraction in dry dispersion at 3 bar with a Malvern MasterSizer 2000. Figure 4 shows the volume percentage of smaller particles in function of the particle size.

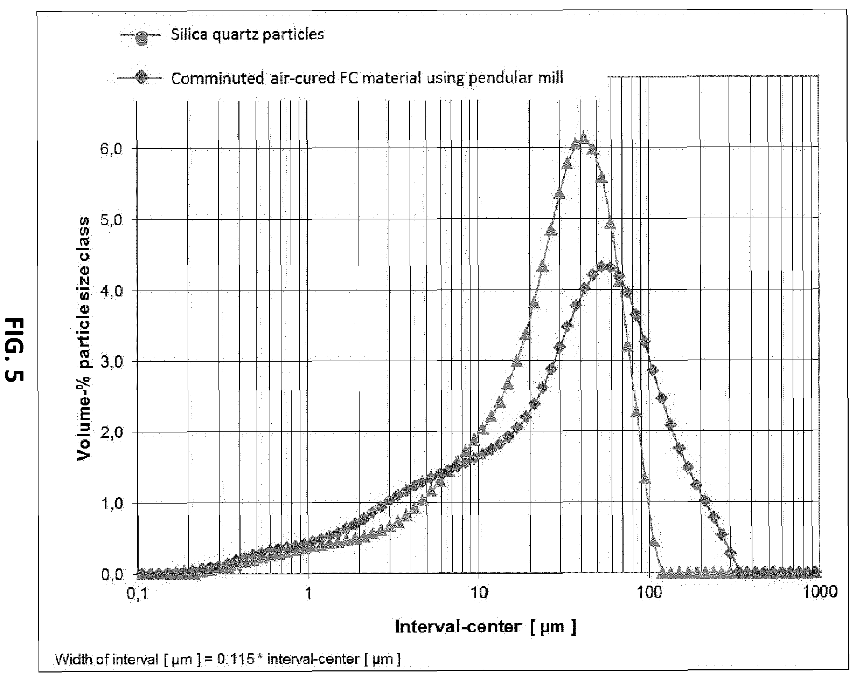

**Figure 5** shows the particle size distribution curves of cement particles and of comminuted fiber cement powder as produced by the methods according to the present invention. Silica quartz samples as well as air-cured fiber cement slate samples were each milled using a pendular mill type roller mill of the Poittemill Group (FR). The particle size distribution was then measured for both types of samples via laser beam diffraction in dry dispersion at 3 bar with a Malvern MasterSizer 2000. Figure 5 shows the volume percentage of particles in function of the particle size class.
Figure 6 is a picture showing the particle morphology of the comminuted fiber cement powder as obtained by the methods of the invention, which has a flowing behavior that is similar to the flowing behavior of cementitious powder, silica flour or limestone flour.

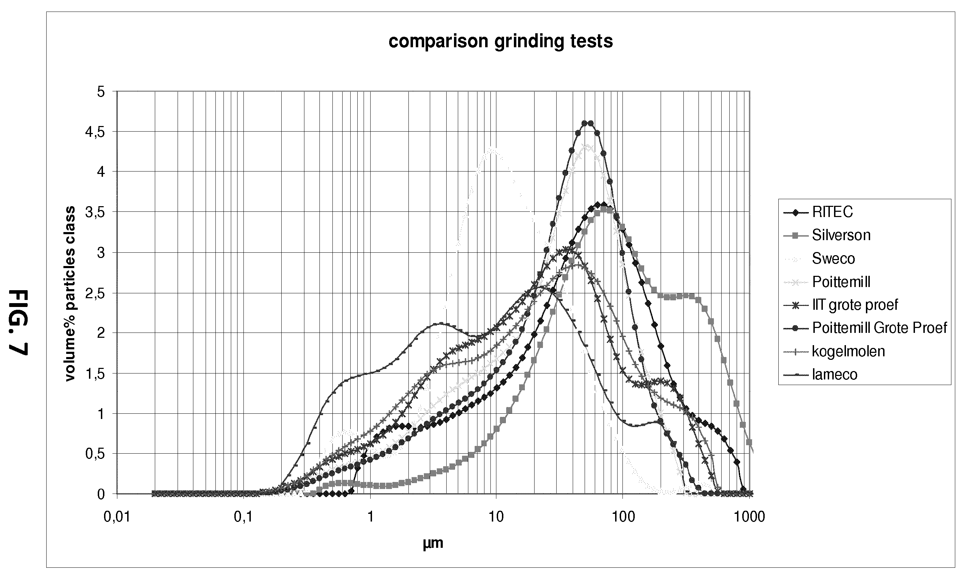

**Figure 7** shows the particle size distribution curves of pre-crushed air-cured fiber cement waste products, which were milled using different milling techniques, i.e. different alternatives to pendular milling. In particular, pre-crushed air-cured fiber cement waste was milled by different techniques, including vibro-energy grinding milling (referred to as "Sweco" and "IIT" in the Figure), ball milling (referred to as "kogelmolen" in the Figure), colloid milling (referred to as Silverson in the Figure), and hammer milling (referred to as RITEC in the Figure). The particle size distribution was then measured for each of the samples via laser beam diffraction in dry dispersion at 3 bar with a Malvern MasterSizer 2000. Figure 7 shows the volume percentage of particles in function of the particle size class.

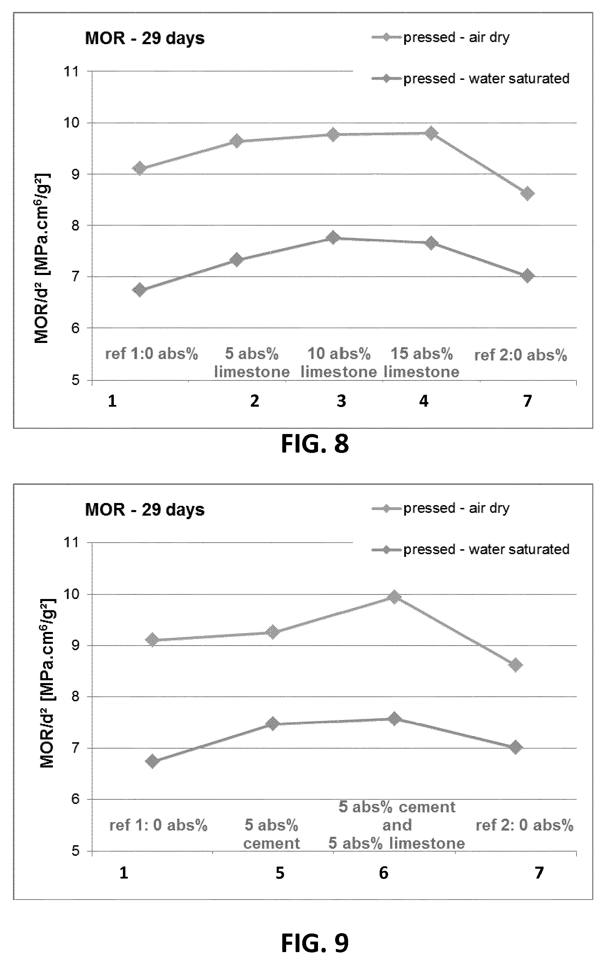

**Figures 8 and 9** represent the density normalized flexural strength (modulus of rupture; MOR), as measured 29 days after production, of 5 different test samples (samples 2, 3, 4, 5, 6 of which the formulation is presented in Table 1) and two reference samples (samples 1 and 7 of which the formulation is presented in Table 1). The modulus of rupture (MOR; expressed in Pa= kg/m.s²) was measured by making use of a UTS/INSTRON apparatus (type 3345; cel=5000N).

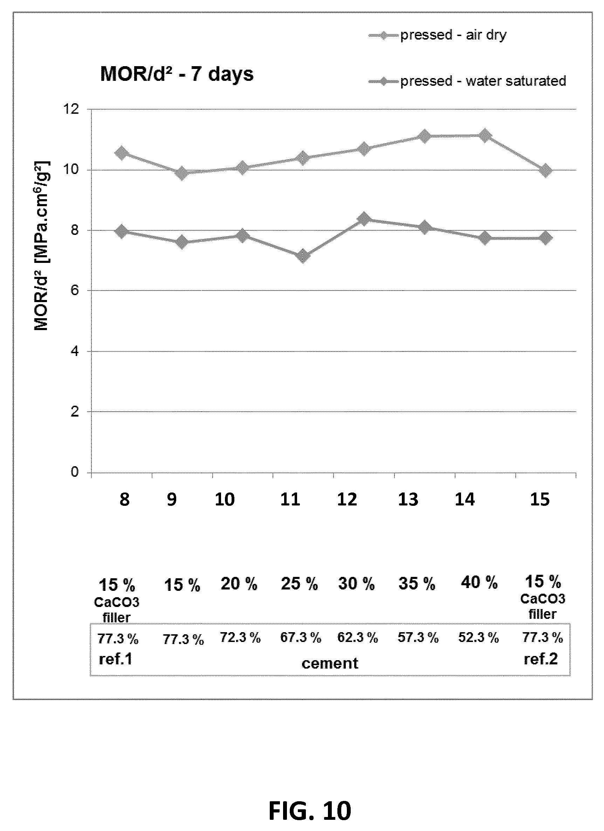

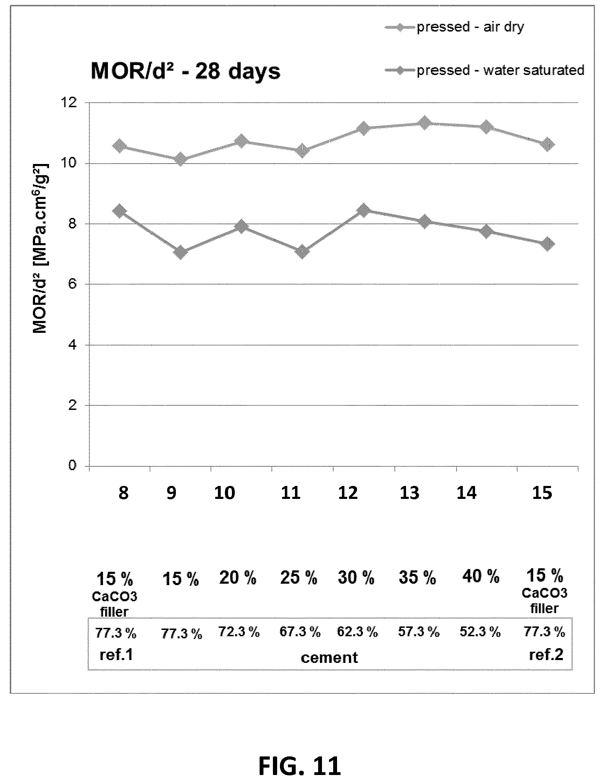

**Figures 10** **and** **11** represent the density normalized flexural strength (modulus of rupture; MOR), as measured 7 and 28 days after production, of 6 different test samples (samples 9, 10, 11, 12, 13 and 14 of which the formulation is presented in Table 2) and two reference samples (samples 8 and 15 of which the formulation is presented in Table 2). The modulus of rupture (MOR; expressed in Pa= kg/m.s²) was measured by making use of a UTS/INSTRON apparatus (type 3345; cel=5000N).

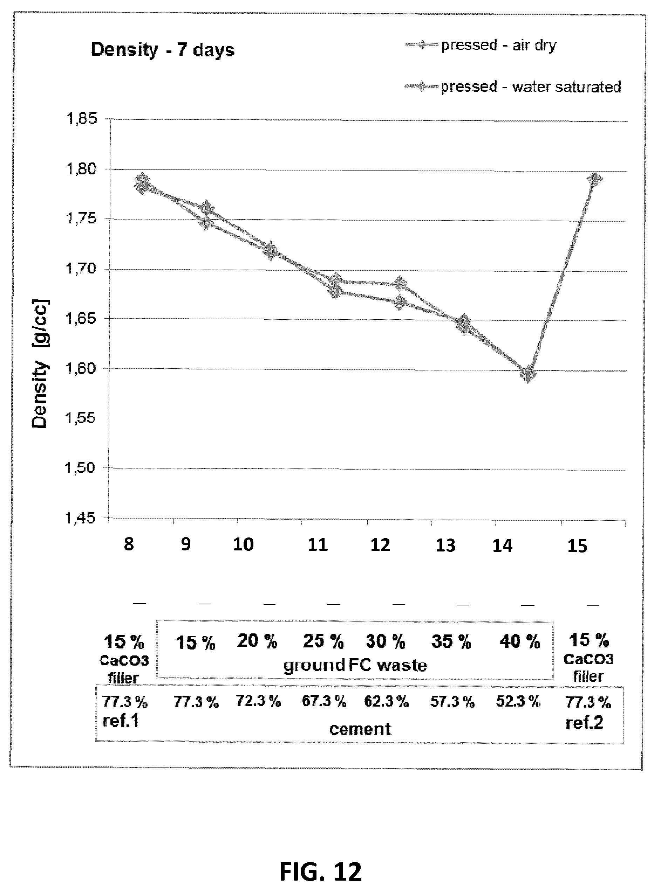

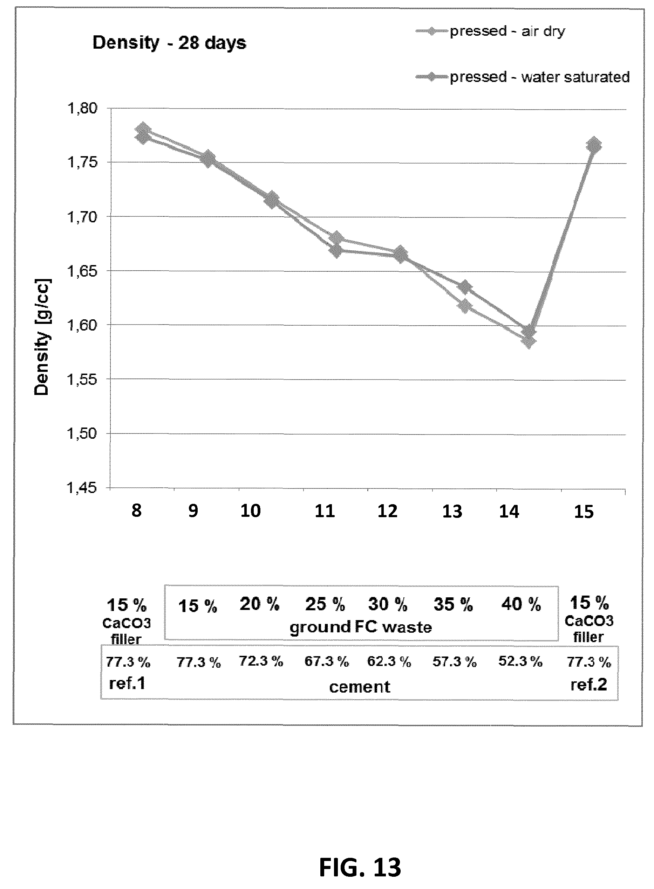

**Figures 12** **and** **13** represent the density, as measured 7 and 28 days after production, of 6 different test samples (samples 9, 10, 11, 12, 13 and 14 of which the formulation is presented in Table 2) and two reference samples (samples 8 and 15 of which the formulation is presented in Table 2). The density was measured by saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).

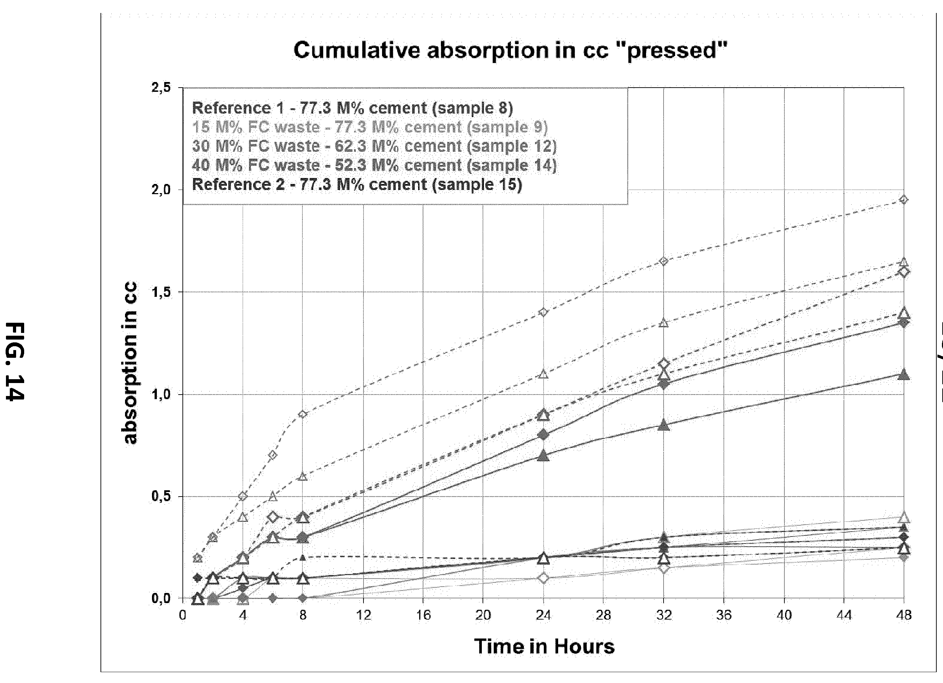

**Figure 14** shows the water absorption in function of time of 3 different test samples (samples 9, 12 and 14 of which the formulation is presented in Table 2) and two reference samples (samples 8 and 15 of which the formulation is presented in Table 2). The water absorption was measured using a Karsten test as further described herein.

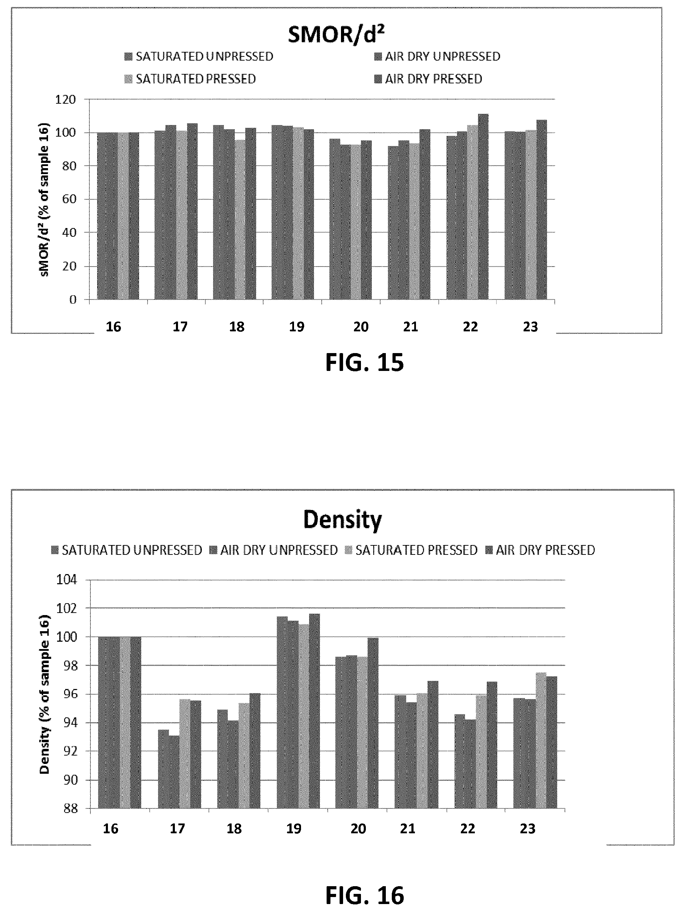

**Figure 15** represents the density normalized flexural strength (modulus of rupture; MOR; relative % of sample 16) of 6 different test samples (samples 17, 18, 20, 21, 22 and 23 of which the formulation is presented in Table 3) and two reference samples (samples 16 and 19 of which the formulation is presented in Table 3). The modulus of rupture (MOR; expressed in Pa= kg/m.s²) was measured by making use of a UTS/INSTRON apparatus (type 3345; cel=5000N).
**Figure 16** represents the density (relative % of sample 16) of 6 different test samples (samples 17, 18, 20, 21, 22 and 23 of which the formulation is presented in Table 3) and two reference samples (samples 16 and 19 of which the formulation is presented in Table 3). The density was measured by saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).

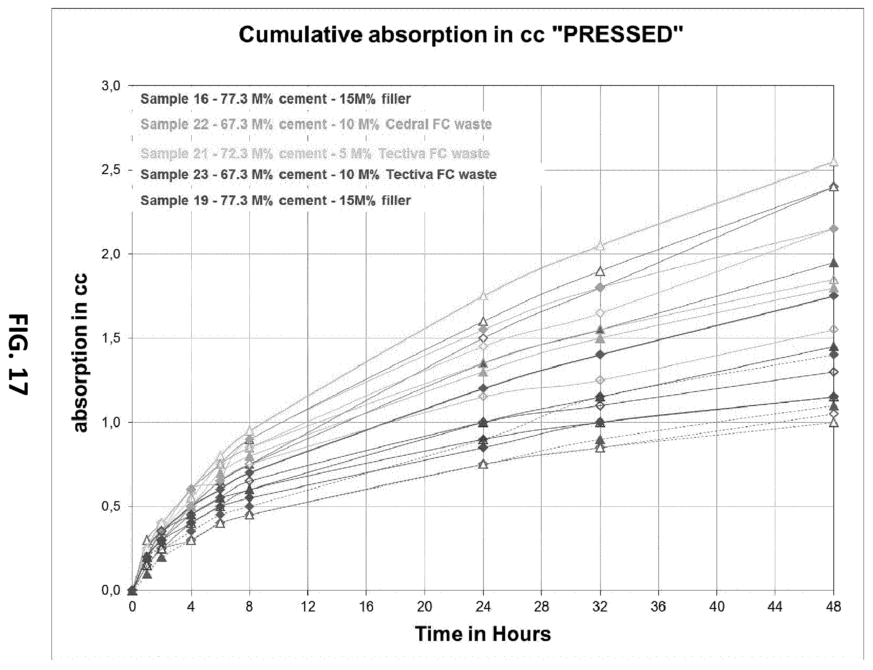

**Figure 17** shows the water absorption in function of time of 3 different test samples (samples 21, 22 and 23 of which the formulation is presented in Table 3) and two reference samples (samples 16 and 19 of which the formulation is presented in Table 3). The water absorption was measured using a Karsten test as further described herein.

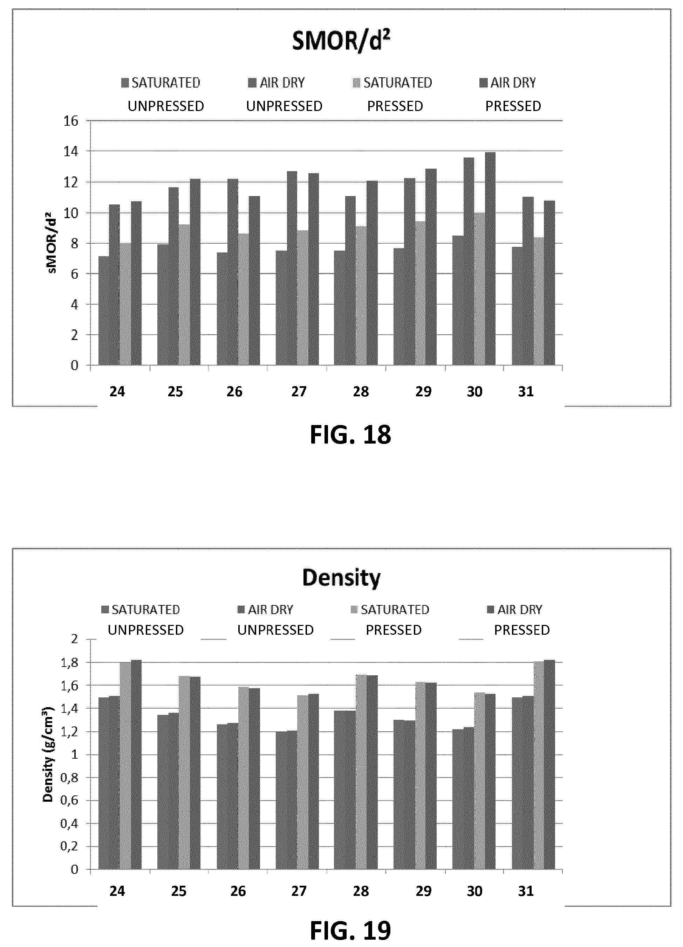

**Figure 18** represents the density normalized flexural strength (modulus of rupture; MOR) of 6 different test samples (samples 25, 26, 27, 28, 29 and 30 of which the formulation is presented in Table 4) and two reference samples (samples 24 and 31 of which the formulation is presented in Table 4). The modulus of rupture (MOR; expressed in Pa= kg/m.s²) was measured by making use of a UTS/INSTRON apparatus (type 3345; cel=5000N).
**Figure 19** represents the density of 6 different test samples (samples 25, 26, 27, 28, 29 and 30 of which the formulation is presented in Table 4) and two reference samples (samples 24 and 31 of which the formulation is presented in Table 4). The density was measured by saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).

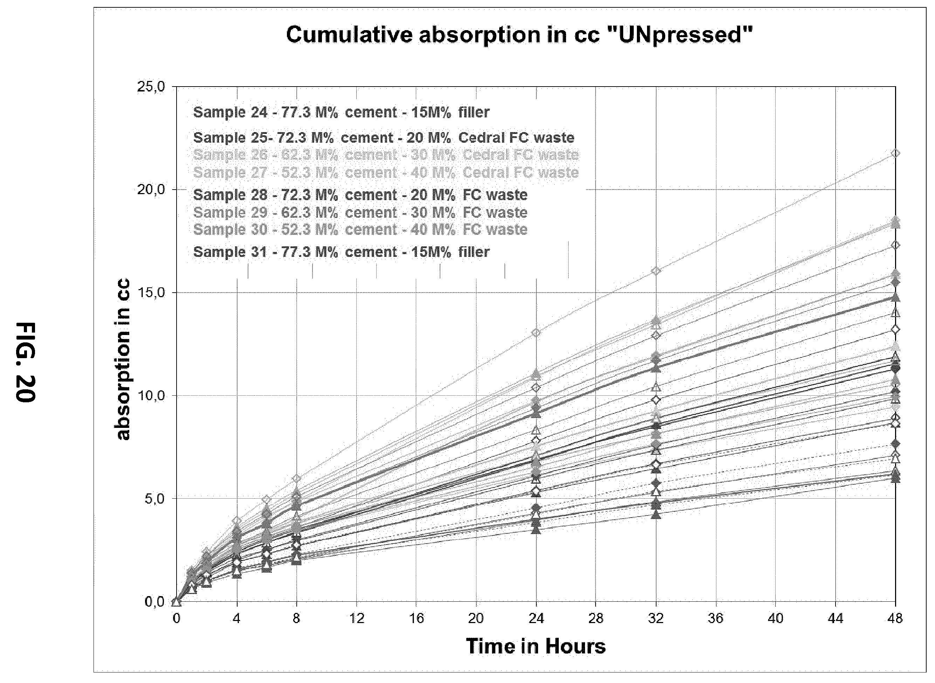

**Figure 20** shows the water absorption in function of time of 6 different test samples (samples 25, 26, 27, 28, 29 and 30 of which the formulation is presented in Table 4) and two reference samples (samples 24 and 31 of which the formulation is presented in Table 4), as measured before pressing. The water absorption was measured using a Karsten test as further described herein.

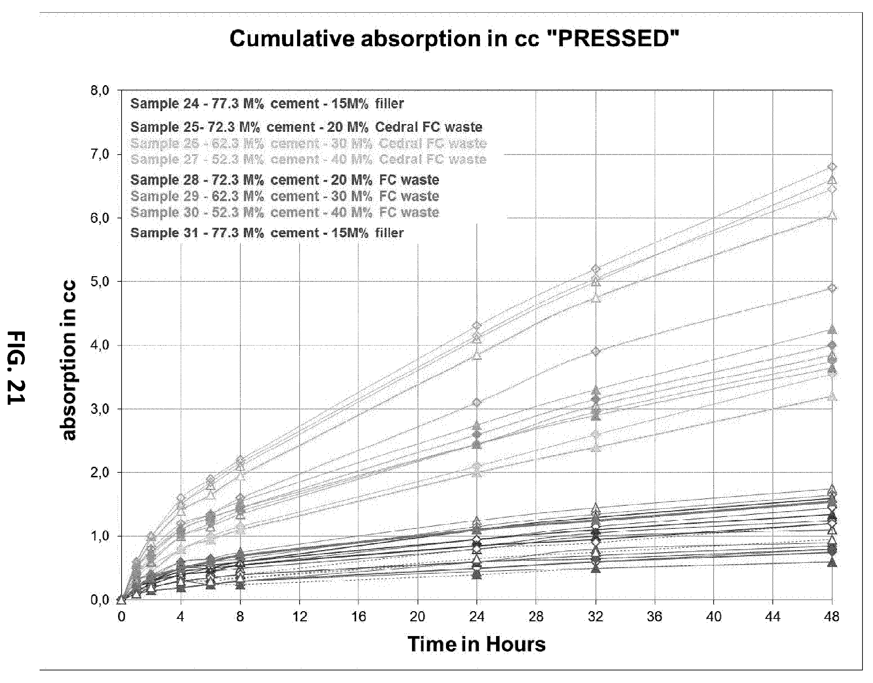

**Figure 21** shows the water absorption in function of time of 6 different test samples (samples 25, 26, 27, 28, 29 and 30 of which the formulation is presented in Table 4) and two reference samples (samples 24 and 31 of which the formulation is presented in Table 4), as measured after pressing. The water absorption was measured using a Karsten test as further described herein.

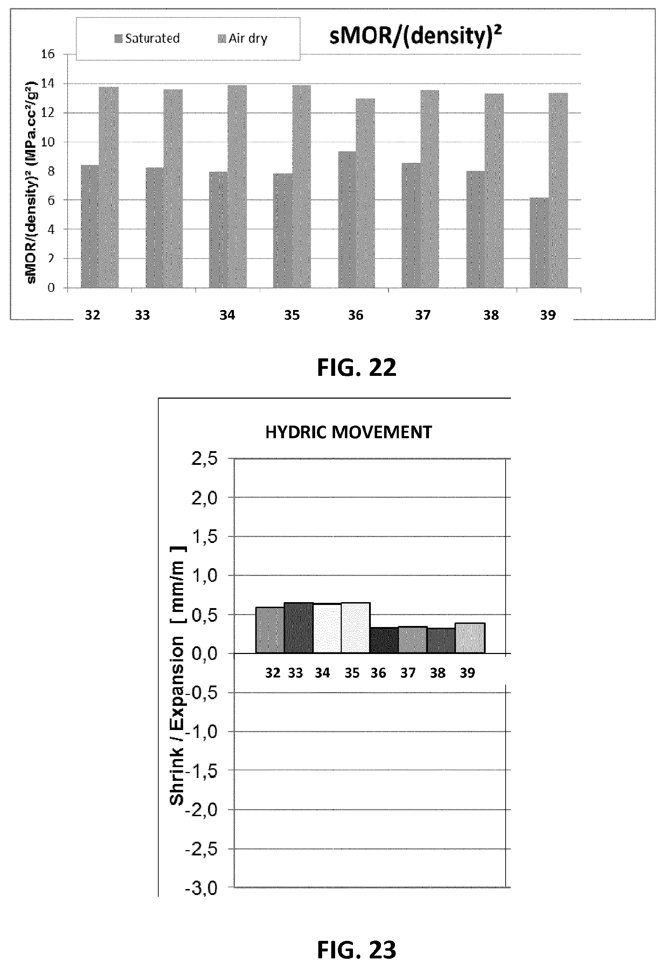

**Figure 22** represents the density normalized flexural strength (modulus of rupture; MOR) of the 6 different test samples (33, 34, 35, 37, 38 and 39 of which the formulation is presented in Table 5) and the two reference samples (32 and 36 of which the formulation is presented in Table 5). The modulus of rupture (MOR; expressed in Pa= kg/m.s²) was measured by making use of a UTS/INSTRON apparatus (type 3345; cel=5000N).
**Figure 23** shows the hygric movement (expressed as shrink/expansion (in mm/m)) of 6 different test samples (samples 33, 34, 35, 37, 38 and 39 of which the formulation is presented in Table 5) and two reference samples (samples 32 and 36 of which the formulation is presented in Table 5). The hygric movement was measured by saturating the samples during 72 hours in tap water. The weight and the dimensions (length and width) of the samples was subsequently determined under saturated conditions. Afterwards, the samples were placed to dry for 48 hours at about 105°C. For each of the dried samples, the weight and the dimensions (length and width) was determined again. The hygric movement for each sample was calculated by dividing the difference in dimensions (length or width) between dry conditions and saturated conditions by the total dimension (length or width, respectively).

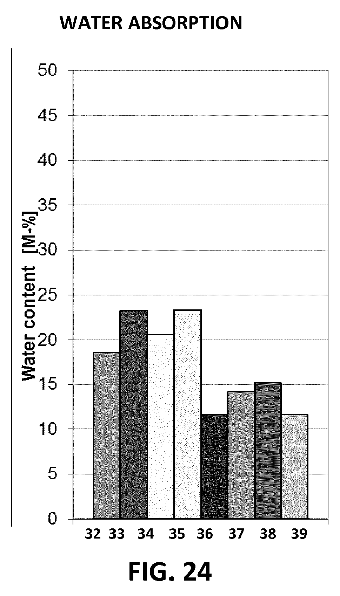

**Figure 24** shows the water content of 6 different test samples of 6 different test samples (samples 33, 34, 35, 37, 38 and 39 of which the formulation is presented in Table 5) and two reference samples (samples 32 and 36 of which the formulation is presented in Table 5). The water absorption was measured using a Karsten test as further described herein.

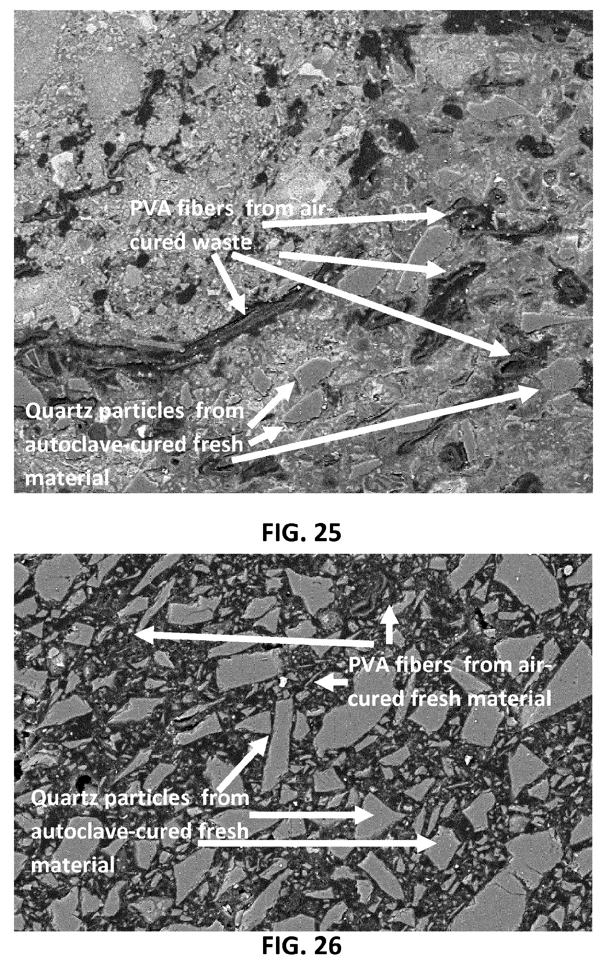

**Figure 25** is a SEM (scan electron microscopy) picture of a sample of autoclave-cured fiber cement product, which comprises recycled air-cured fiber cement waste (characterized by the clearly visible PVA fibers in the product) manufactured according to the methods of the present invention.
**Figure 26** is a SEM (scan electron microscopy) picture of a sample of air-cured fiber cement product, which comprises recycled autoclave-cured fiber cement waste (characterized by the clearly visible white quartz particles in the product) manufactured according to the methods of the present invention.

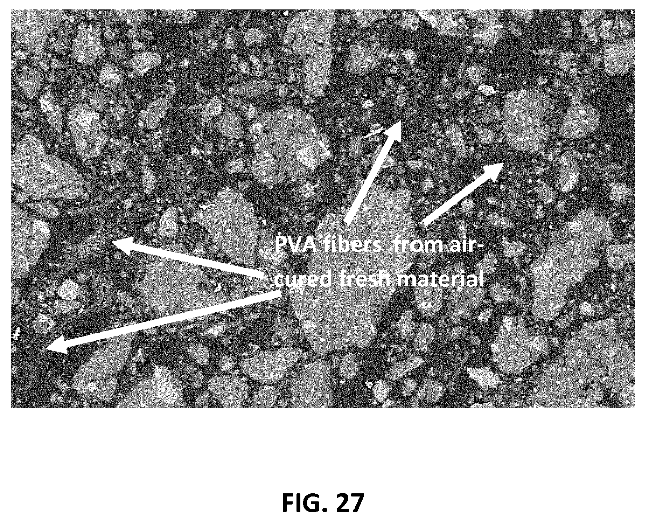

**Figure 27** is a SEM (scan electron microscopy) picture of a sample of fresh air-cured fiber cement product, where the white quartz particles - as observed in recycled air-cured products according to the methods of the present invention - are completely absent.

The same reference signs refer to the same, similar or analogous elements in the different figures.

### Description of illustrative embodiments

The present invention will be described with respect to particular embodiments.

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry", "(fiber) cement slurry", "fiber cementitious slurry" or "fiber cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives.

"Fiber(s)" present in the fiber cement slurry as described herein may be for example process fibers and/or reinforcing fibers which both may be natural fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, trass-cement, slag cement, plaster, calcium silicates formed by autoclave treatment and combinations of particular binders. In more particular embodiments, cement in the products of the invention is Portland cement.

The term "water-permeable" as used herein when referring to a water-permeable (region of a) transport belt generally means that the material of which the water-permeable (region of the) belt is made allows water to flow through its structure to a certain extent.

The term "bulk density" as referred to herein, is to be understood as the property of a powder or granules, or another particulate solid, especially in reference to mineral components (cement particles, filler particles, or silica particles). The bulk density is expressed in kilogram per cubic meter (1 g/ml = 1000 kg/m³) or in grams per milliliter (g/ml) because the measurements are made using cylinders. It may also be expressed in grams per cubic centimetre (g/cm³). The bulk density is defined as the weight of a certain amount of particles of a specific material divided by the total volume this amount of particles occupies. The total volume includes particle volume, inter-particle void volume, and internal pore volume. The bulk density of powders as referred to herein is also called the "freely settled" or "poured" density, i.e. the bulk density measured after pouring the powder, without applying any further compaction process. The bulk density of a powder can be determined by any standard method for measuring bulk density as know to the skilled person.
For instance, the bulk density of a powder can be determined by measuring the volume of a known mass of powder sample, that may have been passed through a sieve, into a graduated cylinder (below described as method A), or by measuring the mass of a known volume of powder that has been passed into a measuring vessel (below described as method B).

### Method A. Measurement in a graduated cylinder

*Procedure.* Pass a quantity of powder sufficient to complete the test through a sieve with apertures greater than or equal to 1.0 mm, if necessary, to break up agglomerates that may have formed during storage; this must be done gently to avoid changing the nature of the material. Into a dry graduated cylinder of 250 ml (readable to 2 ml), gently introduce, without compacting, approximately 100 g of the test sample (m) weighed with 0.1% accuracy. Carefully level the powder without compacting, if necessary, and read the unsettled apparent volume (*V*0) to the nearest graduated unit. Calculate the bulk density in (g/ml) using the formula *m*/*V*0. Generally, replicate determinations are desirable for the determination of this property.
If the powder density is too low or too high, such that the test sample has an untapped apparent volume of either more than 250 ml or less than 150 ml, it is not possible to use 100 g of powder sample. Therefore, a different amount of powder has to be selected as test sample, such that its untapped apparent volume is 150 ml to 250 ml (apparent volume greater than or equal to 60% of the total volume of the cylinder); the mass of the test sample is specified in the expression of results.
For test samples having an apparent volume between 50 ml and 100 ml a 100 ml cylinder readable to 1 ml can be used; the volume of the cylinder is specified in the expression of results.

### Method B. Measurement in a vessel

*Apparatus.* The apparatus consists of a 100 ml cylindrical vessel of stainless steel. *Procedure.* Pass a quantity of powder sufficient to complete the test through a 1.0 mm sieve, if necessary, to break up agglomerates that may have formed during storage and allow the obtained sample to flow freely into the measuring vessel until it overflows. Carefully scrape the excess powder from the top of the vessel. Determine the mass (*M0*) of the powder to the nearest 0.1% by subtraction of the previously determined mass of the empty measuring vessel. Calculate the bulk density (g/ml) using the formula *M0*/*100* and record the average of three determinations using three different powder samples.

A "(fiber cement) sheet" or "fiber cement sheet" or "sheet" as interchangeably used herein, and also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope or spirit of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

### EXAMPLES

### Example 1: Production of air-cured comminuted fiber cement powder as produced with a pendular mill according to the methods of the invention

In particular embodiments, the desired particle distribution of air-cured comminuted fiber cement material according to the methods of the present invention can be obtained by milling air-cured fiber cement material in the absence of sand or another silica source. This further facilitates the comminuted cured fiber cement material to be used as a good raw material for both fresh air cured and autoclave cured fiber cement waste material.
In further particular embodiments, comminuting of the cured fiber cement material is done in so-called dry state at a humidity of between about 5% to about 10%, preferably between about 5% to about 6%. The provided cured fiber cement material is thus not to be brought in suspension of a liquid (typically water) to enable the milling, as is the case for some other milling techniques. As a result, a relatively dry comminuted cured fiber cement material in the form of powder is provided. This facilitates storage of an intermediate product before using it for e.g. making fresh cured fiber cement waste material, being fresh air cured and autoclave cured fiber cement waste material.

The cured fiber cement powder obtained by comminuting cured fiber cement material according to the methods of the present invention has a particle size distribution as shown for example in Figures 2 to 5. As can be derived from the Figures 2 to 5, the particle distribution is similar to that of the standard fresh starting materials to produce fiber cement, e.g. cementitious particles, ground silica particles and/or ground lime particles.

In particular embodiments of the methods of the present invention, the cured fiber cement material is fed to a pendular mill (i.e. for comminuting) as parts having maximum size of not more than 5 cm, typically as rectangular-like pieces with a sides of not more than 3 cm or even not more than 2cm. In the context of the present invention, a part with a size of not more than A cm means that the largest length of the particle is not more than A cm.

In Figs. 2 to 5, the distributions of the particle size of milled cured fiber cement slates versus cement particles (Figs. 2 and 3) and versus silica particles (Figs. 4 and 5) are depicted. The air-cured fiber cement slates, obtainable as Alterna from Eternit NV Belgium, were first pre-crushed to such that the not more than 2 by 2 cm. The total humidity of the pre-crushed cured fiber cement waste material, in this case air cured fiber cement material, was about 5%-6%w based upon dry weight.
The %w based upon dry weight is the weight difference between the material as samples and the material dried in a ventilated furnace at 105°C until constant weight is obtained.

This pre-crushed material was fed at a flow rate of about 350 kg/hr to about 800 kg/hr to a pendular mill type roller mill of the Poittemill Group (FR), in which the material was comminuted at a rotation speed of between about 100 and about 400 tr/min. To compensate the humidity of the pre-crushed material, hot air (at a temperature between about 20°C and about 100°C) was fed together with the pre-crushed material, in order to instantaneously suppress the humidity of the pre-crushed material and the ground fiber cement powder obtained.

As such the comminuted cured fiber cement material was obtained of which the particle size distribution curve, measured using laser beam diffraction on dry dispersed material at 3 bar by means of the apparatus Malvern mastersizer 2000 , was obtained.

This fiber cement powder as obtained by pendular milling had a good consistency (not woolly or fluffy), a suitable bulk density (between about 1000 kg/m³ and about 1300kg/m³) and a good particle distribution, to be used for the production of fresh fiber cement products. Without being bound to any hypothesis or theory, the present inventors believe that the pendular milling as used in the methods according to the present invention provides a novel and improved comminuted fiber cement waste powder because with this technique the fiber cement waste is squashed or flattened as opposed to other milling techniques, which typically mill by crushing or grinding.

### Example 2: Milling of fiber cement waste using milling techniques other than pendular milling

Comminuted cured fiber cement material was also produced by applying alternative milling techniques, i.e. other than pendular milling.
Figure 7 shows the distribution curves of the same pre-crushed fiber cement waste products which were milled using different milling techniques, i.e. different alternatives to pendular milling.
The curves depicted in Figure 7 show the particle size distribution curves of the resulting cured fiber cement powder, as produced using vibro-energy grinding milling (referred to as "Sweco" and "IIT" in the Figure), ball milling (referred to as "kogelmolen" in the Figure), colloid milling (referred to as Silverson in the Figure), and hammer milling (referred to as RITEC in the Figure). When comparing the particle distributions of Figure 7 with the particle distribution of cement in Figure 3 or silica particles in Figure 5, it is clear that only the pendular milling technique (referred to as Poittemill in Figure 7) is suitable for the production of particles having a distribution curve similar to that of cement or filler (silica) particles.
Moreover, only the pendular milling technique resulted in a desired consistency of the resulting powder, namely a fine powder with a flowing behavior similar to that of cement, ground siliceous material or ground filler material (e.g. lime or limestone) and with a bulk density of between about 1000 kg/m² and about 1300 kg/ m³.
Thus, grinding or milling techniques other than pendular milling did not provide any useful powder with an appropriate consistency and/or particle size distribution for the production of fresh fiber cement products.

### Example 3: Production of air-cured fiber cement slates comprising from 5M% to 10M% of air-cured comminuted fiber cement powder as produced according to the methods of the invention

The fiber cement powder, obtained as described in Example 1, was used to produce fresh fiber cement slates, i.e. fresh fiber cement air cured products.

For the production of fiber cement slates, typically the following formulation of an aqueous fiber cement slurry is used:
- 73 to 80 M% Cement such as Portland cement
- 3 to 4 M% cellulose fibers (such as softwood unbleached Kraft pulp)
- 1.5 to 1.9 M% polyvinylalcohol fibers
- 10 to 18 M% of carbonaceous filler (typically limestone)
- and optionally a minor amount of other additives.

M% refers to the mass of the component over the total mass of all components except free water, i.e. the dry matter.

A series of 5 test slurry samples was produced (see Table 1 below: samples 2 to 6), wherein at least part or all of the carbonaceous filler, or at least part of the cement, or part of both the carbonaceous filler and the cement, was replaced by the comminuted cured fiber cement powder as obtained using the comminuting method explained in Example 1. In addition, 2 reference slurry samples (see Table 1 below: samples 1 and 7) were produced, not containing any comminuted waste powder.

As such, the following 7 fiber cement slurry formulations were obtained:

**Table 1- FC formulations M% samples 1 to 7 (PVA: polyvinylalcohol fiber Kuraray A8; Cellulose: Solombala UKP 60°SR; Condensed silica fume: EMSAC 500S Elkem Materials Ltd.; CaCO₃ filler: Calcitec 2001S, Carmeuse SA; Cement: CEMI 42.5N, CBR SA, Lixhe)**

| | 1 | 2 | 3 | 4 | 5 | 6 | 7 |
|---|---|---|---|---|---|---|---|
| PVA | 1.8 | 1.8 | 1.8 | 1.8 | 1.8 | 1.8 | 1.8 |
| Cellulose | 3.3 | 3.3 | 3.3 | 3.3 | 3.3 | 3.3 | 3.3 |
| Condensed silica fume | 2.6 | 2.6 | 2.6 | 2.6 | 2.6 | 2.6 | 2.6 |
| CaCO₃ filler | 15.0 | 10.0 | 5.0 | - | 15.0 | 10.0 | 15.0 |
| Cement | 77.3 | 77.3 | 77.3 | 77.3 | 72.3 | 72.3 | 77.3 |
| FC waste | - | 5.0 | 10.0 | 15.0 | 5.0 | 10.0 | - |
| Total | 100.00 | 100.00 | 100.00 | 100.00 | 100.00 | 100.00 | 100.00 |

The fiber cement slurry formulations as presented in Table 1 were used to provide green sheets of fiber cement on a state of the art Hatschek production machine. The green sheets were pressed at 230 kg/cm² and air-cured by subjecting them to a curing at 60°C for 8 hours, and thereafter curing at ambient conditions.
The air-cured sheets were subsequently cut into appropriate dimensions and coated, to provide air-cured fiber cement slates.

After 29 days, the formed air-cured sheets were analyzed for their physico-mechanical characteristics, i.e. modulus of rupture (MOR; expressed in Pa= kg/m.s²). The modulus of rupture (MOR; expressed in Pa= kg/m.s²) was measured by making use of a UTS/INSTRON apparatus (type 3345; cel=5000N).
Also, the water absorption as measured by a Karsten test was determined. The test was performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).
For each of the air-dried and water-saturated samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

The results are presented in Figures 8 and 9.
As can be derived from the graphs in Figures 8 and 9, which represent the density normalized flexural strength (modulus of rupture; MOR) of the 5 different test samples (2, 3, 4, 5, 6 of which the formulation is presented in Table 1) and the two reference samples (1 and 7 of which the formulation is presented in Table 1), it can be concluded that the density normalized flexural strength or modulus of rupture (MOR/d²) is higher in the test samples as compared to the reference samples. This means that the samples comprising the comminuted fiber cement waste powder in amounts of between 5M% and 15M% as produced according to the methods of the present invention have a higher strength than reference samples not containing any waste powder.

In addition, based on the results from the Karsten tests (data not shown), it can be concluded that adding the fiber cement waste powder according to the invention in replacement of cement or filler material does not have an effect on the water absorption as compared to reference samples not containing any comminuted fiber cement waste powder.

Thus, from the above, it can be concluded that fiber cement products comprising from 5M% to 15M% of comminuted fiber cement waste powder as produced by the methods of the present invention perform at least comparable and mostly even better than the reference fiber cement products not comprising any comminuted waste powder.

### Example 4: Production of air-cured fiber cement slates comprising from 15M% to 40M% of air-cured comminuted fiber cement powder as produced according to the methods of the invention

The fiber cement powder, obtained as described in Example 1, was used to produce fresh fiber cement slates, i.e. fresh fiber cement air cured products.

For the production of fiber cement slates, typically the following formulation of an aqueous fiber cement slurry is used:
- 73 to 80 M% Cement such as Portland cement
- 3 to 4 M% cellulose fibers (such as softwood unbleached Kraft pulp)
- 1.5 to 1.9 M% polyvinylalcohol fibers
- 10 to 18 M% of carbonaceous filler (typically limestone)
- and optionally a minor amount of other additives.

M% refers to the mass of the component over the total mass of all components except free water, i.e. the dry matter.

A series of 6 test slurry samples was produced (see Table 2 below: samples 9 to 14), wherein at least part or all of the carbonaceous filler, or at least part of the cement, or part of both the carbonaceous filler and the cement, was replaced by the comminuted cured fiber cement powder as obtained using the comminuting method explained in Example 1. In addition, 2 reference slurry samples (see Table 2 below: samples 8 and 15) were produced, not containing any comminuted waste powder.

As such, the following 8 fiber cement slurry formulations were obtained:

**Table 2 - FC formulations M% samples 8 to 15 (PVA: polyvinylalcohol fiber Kuraray A8; Cellulose: Solombala UKP 60°SR; Condensed silica fume: EMSAC 500S Elkem Materials Ltd.; CaCO₃ filler: Calcitec 2001S, Carmeuse SA; Cement: CEMI 42.5N, CBR SA, Lixhe)**

| | 8 | 9 | 10 | 11 | 12 | 13 | 14 | 15 |
|---|---|---|---|---|---|---|---|---|
| PVA | 1,8 | 1,8 | 1,8 | 1,8 | 1,8 | 1,8 | 1,8 | 1,8 |
| Cellulose | 3,3 | 3,3 | 3,3 | 3,3 | 3,3 | 3,3 | 3,3 | 3,3 |
| Condensed silica fume | 2,6 | 2,6 | 2,6 | 2,6 | 2,6 | 2,6 | 2,6 | 2,6 |
| CaCO₃ filler | 15,0 | 0,0 | 0,0 | 0,0 | 0,0 | 0,0 | 0,0 | 15,0 |
| Cement | 77,3 | 77,3 | 72,3 | 67,3 | 62,3 | 57,3 | 52,3 | 77,3 |
| FC waste | 0,0 | 15,0 | 20,0 | 25,0 | 30,0 | 35,0 | 40,0 | 0,0 |
| Total | 100,00 | 100,00 | 100,00 | 100,00 | 100,00 | 100,00 | 100,00 | 100,00 |

The fiber cement slurry formulations as presented in Table 2 were used to provide green sheets of fiber cement on a state of the art Hatschek production machine. The green sheets were pressed at 230 kg/cm² and air-cured by subjecting them to a curing at 60°C for 8 hours, and thereafter curing at ambient conditions.
The air-cured sheets were subsequently cut into appropriate dimensions and coated, to provide air-cured fiber cement slates.

After 7 days and after 29 days, the formed air-cured sheets were analyzed for their physico-mechanical characteristics, i.e. modulus of rupture (MOR).
The modulus of rupture (MOR; expressed in Pa= kg/m.s²) was measured by making use of a UTS/INSTRON apparatus (type 3345; cel=5000N).
The density of the samples was measured by first saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).
Finally, the water absorption as measured by a Karsten test was determined. The test was performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).
For each of the air-dried and water-saturated samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

The results are presented in Figures 10 to 14.
As can be derived from the graphs in Figures 10 and 11, which represent the density normalized flexural strength (modulus of rupture; MOR) of the 6 different test samples (9, 10, 11, 12, 13 and 14 of which the formulation is presented in Table 2) and the two reference samples (8 and 15 of which the formulation is presented in Table 2), it can be concluded that the density normalized flexural strength or modulus of rupture (MOR/d²) is at least comparable and in some instances even higher in the test samples as compared to the reference samples. This means that the samples comprising the comminuted fiber cement waste powder in amounts of between 15M% and 40M% as produced according to the methods of the present invention have at least a comparable strength with reference samples not containing any waste powder.

Moreover, as depicted in Figures 12 and 13, the density of the test samples 9 to 14, where part or all of the filler and/or part of the cement was replaced by the comminuted fiber cement powder of the invention, was significantly lower as compared to the reference samples not containing any waste powder. The density indeed gradually decreases when more comminuted fiber cement powder is added in replacement of filler and/or cement. This is a very important finding since a lower density is directly linked with a lower mass of the resulting products, which greatly facilitates the handling, workability and installation of the products for the end users.

Finally, based on the results from the Karsten tests as presented in Figure 14, it can be concluded that adding the air-cured fiber cement waste powder in amounts of 15M% in replacement of cement or filler material does not have an effect on the water absorption as compared to reference samples not containing any comminuted fiber cement waste powder. Adding the autoclave-cured fiber cement waste powder in higher amounts of for instance 30M% or 40 M% in replacement of cement or filler material results, however, in an increase in water absorption as compared to reference samples not containing any comminuted fiber cement waste powder.

Thus, from the above, it can be concluded that fiber cement products comprising from 15M% to 40M% of air-cured comminuted fiber cement waste powder as produced by the methods of the present invention perform at least comparable and mostly even better than the reference fiber cement products not comprising any comminuted waste powder.

### Example 5: Production of autoclave-cured comminuted fiber cement powder as produced with a pendular mill according to the methods of the invention

Autoclave-cured fiber cement products, obtainable as Cedral and Tectiva from Eternit NV Belgium, were first pre-crushed to such that the not more than 2 by 2 cm. The total humidity of the pre-crushed cured fiber cement waste material, in this case air cured fiber cement material, was about 5%-6%w based upon dry weight.
The %w based upon dry weight is the weight difference between the material as samples and the material dried in a ventilated furnace at 105°C until constant weight is obtained.

This pre-crushed material was fed at a flow rate of about 350 kg/hr to about 800 kg/hr to a pendular mill type roller mill of the Poittemill Group (FR), in which the material was comminuted at a rotation speed of between about 100 and about 400 tr/min. To compensate the humidity of the pre-crushed material, hot air (at a temperature between about 20°C and about 100°C) was fed together with the pre-crushed material, in order to instantaneously suppress the humidity of the pre-crushed material and the ground fiber cement powder obtained.

As such the comminuted cured fiber cement material was obtained of which the particle size distribution curve, measured using laser beam diffraction on dry dispersed material at 3 bar by means of the apparatus Malvern mastersizer 2000 , was obtained.

This fiber cement powder as obtained by pendular milling had a good consistency (not woolly or fluffy), a suitable bulk density (between about 1000 kg/m³ and about 1300kg/m³) and a good particle distribution, to be used for the production of fresh fiber cement products. Without being bound to any hypothesis or theory, the present inventors believe that the pendular milling as used in the methods according to the present invention provides a novel and improved comminuted fiber cement waste powder because with this technique the fiber cement waste is squashed or flattened as opposed to other milling techniques, which typically mill by crushing or grinding.

### Example 6: Production of air-cured fiber cement slates comprising from 5M% to 15M% of autoclave-cured comminuted fiber cement powder as produced according to the methods of the invention

The autoclave-cured fiber cement waste powders derived from Cedral products and Tectiva fiber cement products, obtained as described in Example 6, were used to produce fresh fiber cement slates, i.e. fresh fiber cement air cured products.

For the production of fiber cement slates, typically the following formulation of an aqueous fiber cement slurry is used:
- 73 to 80 M% Cement such as Portland cement
- 3 to 4 M% cellulose fibers (such as softwood unbleached Kraft pulp)
- 1.5 to 1.9 M% polyvinylalcohol fibers
- 10 to 18 M% of carbonaceous filler (typically limestone)
- and optionally a minor amount of other additives.

M% refers to the mass of the component over the total mass of all components except free water, i.e. the dry matter.

A series of 6 test slurry samples was produced (see Table 3 below: samples 17, 18, 20, 21, 22 and 23), wherein at least part or all of the carbonaceous filler, or at least part of the cement, or part of both the carbonaceous filler and the cement, was replaced by the comminuted autoclave-cured fiber cement powder as obtained using the comminuting method explained in Example 6. In addition, 2 reference slurry samples (see Table 3 below: samples 16 and 19) were produced, not containing any autoclave-cured comminuted waste powder.

As such, the following 8 fiber cement slurry formulations were obtained:

**Table 3 - FC formulations M% samples 16 to 23 (PVA: polyvinylalcohol fiber Kuraray A8; Cellulose: Solombala UKP 60°SR; Condensed silica fume: EMSAC 500S Elkem Materials Ltd.; CaCO₃ filler: Calcitec 2001S, Carmeuse SA; Cement: CEMI 42.5N, CBR SA, Lixhe)**

| | 16 | 17 | 18 | 19 | 20 | 21 | 22 | 23 |
|---|---|---|---|---|---|---|---|---|
| PVA | 1,8 | 1,8 | 1,8 | 1,8 | 1,8 | 1,8 | 1,8 | 1,8 |
| Cellulose | 3,3 | 3,3 | 3,3 | 3,3 | 3,3 | 3,3 | 3,3 | 3,3 |
| Condensed silica fume | 2,6 | 2,6 | 2,6 | 2,6 | 2,6 | 2,6 | 2,6 | 2,6 |
| CaCO₃ filler | 15,0 | 0,0 | 0,0 | 15,0 | 15,0 | 15,0 | 15,0 | 15,0 |
| Cement | 77,3 | 77,3 | 77,3 | 77,3 | 72,3 | 72,3 | 67,3 | 67,3 |
| FC waste Cedral | 0,0 | 15,0 | 0,0 | 0,0 | 5,0 | 0,0 | 10,0 | 0,0 |
| FC waste Tectiva | 0,0 | 0,0 | 15,0 | 0,0 | 0,0 | 5,0 | 0,0 | 10,0 |
| Total | 100,00 | 100,00 | 100,00 | 100,00 | 100,00 | 100,00 | 100,00 | 100,00 |

The fiber cement slurry formulations as presented in Table 3 were used to provide green sheets of fiber cement on a state of the art Hatschek production machine. The green sheets were pressed at 230 kg/cm² and air-cured by subjecting them to a curing at 60°C for 8 hours, and thereafter curing at ambient conditions.
The air-cured sheets were subsequently cut into appropriate dimensions and coated, to provide air-cured fiber cement slates.

The formed air-cured sheets were analyzed for their physico-mechanical characteristics characteristics, i.e. modulus of rupture (MOR). The modulus of rupture (MOR; expressed in Pa= kg/m.s²) was measured by making use of a UTS/INSTRON apparatus (type 3345; cel=5000N).
The density of the samples was measured by first saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).
Finally, the water absorption as measured by a Karsten test was determined. The test was performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).
For each of the air-dried and water-saturated samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

The results are presented in Figures 15 to 17.
As can be derived from the graph in Figure 15, which represents the density normalized flexural strength (modulus of rupture; MOR) of the 6 different test samples (17, 18, 20, 21, 22 and 23 of which the formulation is presented in Table 3) and the two reference samples (16 and 19 of which the formulation is presented in Table 3), it can be observed that the density normalized flexural strength or modulus of rupture (MOR/d²) in the test samples is not significantly different to the MOR/d² of the reference samples. This means that the samples comprising the comminuted fiber cement waste powder in amounts of between 5M% and 15M% as produced according to the methods of the present invention have a comparable mechanical strength with regard to the reference samples not containing any waste powder.

Moreover, as depicted in Figure 16, the density of the test samples 17, 18, 20, 21, 22 and 23, where part or all of the filler and/or part of the cement was replaced by the autoclave-cured comminuted fiber cement powder of the invention, was significantly lower as compared to the reference samples not containing any waste powder. The density indeed gradually decreases when more comminuted fiber cement powder is added in replacement of filler and/or cement. This is a very important finding since a lower density is directly linked with a lower mass of the resulting products, which greatly facilitates the handling, workability and installation of the products for the end users.

Finally, based on the results from the Karsten tests as presented in Figure 17, it can be concluded that adding the autoclave-cured fiber cement waste powder in amounts from 5M% to 10M% in replacement of cement or filler material does not have an effect on the water absorption as compared to reference samples not containing any comminuted fiber cement waste powder.

Thus, from the above, it can be concluded that fiber cement products comprising from 5M% to 15M% of autoclave-cured comminuted fiber cement waste powder as produced by the methods of the present invention perform significantly better than the reference fiber cement products not comprising any comminuted waste powder.

### Example 7: Production of air-cured fiber cement slates comprising from 20M% to 40M% of autoclave-cured comminuted fiber cement powder as produced according to the methods of the invention

The autoclave-cured fiber cement waste powders derived from Cedral products and Tectiva fiber cement products, obtained as described in Example 6, were used to produce fresh fiber cement slates, i.e. fresh fiber cement air cured products.

For the production of fiber cement slates, typically the following formulation of an aqueous fiber cement slurry is used:
- 73 to 80 M% Cement such as Portland cement
- 3 to 4 M% cellulose fibers (such as softwood unbleached Kraft pulp)
- 1.5 to 1.9 M% polyvinylalcohol fibers
- 10 to 18 M% of carbonaceous filler (typically limestone)
- and optionally a minor amount of other additives.

M% refers to the mass of the component over the total mass of all components except free water, i.e. the dry matter.

A series of 6 test slurry samples was produced (see Table 4 below: samples 25 to 30), wherein at least part or all of the carbonaceous filler, or at least part of the cement, or part of both the carbonaceous filler and the cement, was replaced by the comminuted autoclave-cured fiber cement powder as obtained using the comminuting method explained in Example 6. In addition, 2 reference slurry samples (see Table 4 below: samples 24 and 31) were produced, not containing any autoclave-cured comminuted waste powder.

As such, the following 8 fiber cement slurry formulations were obtained:

**Table 4 - FC formulations M% samples 24 to 31 (PVA: polyvinylalcohol fiber Kuraray A8; Cellulose: Solombala UKP 60°SR; Condensed silica fume: EMSAC 500S Elkem Materials Ltd.; CaCO₃ filler: Calcitec 2001S, Carmeuse SA; Cement: CEMI 42.5N, CBR SA, Lixhe)**

| | 24 | 25 | 26 | 27 | 28 | 29 | 30 | 31 |
|---|---|---|---|---|---|---|---|---|
| PVA | 1,8 | 1,8 | 1,8 | 1,8 | 1,8 | 1,8 | 1,8 | 1,8 |
| Cellulose | 3,3 | 3,3 | 3,3 | 3,3 | 3,3 | 3,3 | 3,3 | 3,3 |
| Condensed silica fume | 2,6 | 2,6 | 2,6 | 2,6 | 2,6 | 2,6 | 2,6 | 2,6 |
| CaCO₃ filler | 15,0 | 0,0 | 0,0 | 0,0 | 0,0 | 0,0 | 0,0 | 15,0 |
| Cement | 77,3 | 72,3 | 62,3 | 52,3 | 72,3 | 62,3 | 52,3 | 77,3 |
| FC waste Cedral | 0,0 | 20,0 | 30,0 | 40,0 | 0,0 | 0,0 | 0,0 | 0,0 |
| FC waste Tectiva | 0,0 | 0,0 | 0,0 | 0,0 | 20,0 | 30,0 | 40,0 | 0,0 |
| Total | 100,00 | 100,00 | 100,00 | 100,00 | 100,00 | 100,00 | 100,00 | 100,00 |

The fiber cement slurry formulations as presented in Table 4 were used to provide green sheets of fiber cement on a state of the art Hatschek production machine. The green sheets were pressed at 230 kg/cm² and air-cured by subjecting them to a curing at 60°C for 8 hours, and thereafter curing at ambient conditions.
The air-cured sheets were subsequently cut into appropriate dimensions and coated, to provide air-cured fiber cement slates.

The formed air-cured sheets were analyzed for their physico-mechanical characteristics, i.e. modulus of rupture (MOR). The modulus of rupture (MOR; expressed in Pa= kg/m.s²) was measured by making use of a UTS/INSTRON apparatus (type 3345; cel=5000N). The density of the samples was measured by first saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).
Finally, the water absorption as measured by a Karsten test was determined. The test was performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).
For each of the air-dried and water-saturated samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

The results are presented in Figures 18 to 20.
As can be derived from the graph in Figure 18, which represents the density normalized flexural strength (modulus of rupture; MOR) of the 6 different test samples (25 to 30 of which the formulation is presented in Table 4) and the two reference samples (24 and 31 of which the formulation is presented in Table 4), it can be concluded that the density normalized flexural strength or modulus of rupture (MOR/d²) is higher in the test samples as compared to the reference samples, especially when the samples are pressed. This means that the samples comprising the comminuted fiber cement waste powder in amounts of between 20M% and 40M% as produced according to the methods of the present invention have a higher strength with reference samples not containing any waste powder. The best results were obtained when the samples are pressed.

Moreover, as depicted in Figure 19, the density of the test samples 25 to 30, where part or all of the filler and/or part of the cement was replaced by the autoclave-cured comminuted fiber cement powder of the invention, was significantly lower as compared to the reference samples 24 and 31, which do not contain any waste powder. The density indeed gradually decreases when more comminuted fiber cement powder is added in replacement of filler and/or cement. This effect was observed in both pressed and unpressed samples when respectively compared to the corresponding pressed and unpressed reference samples. This is a very important finding since a lower density is directly linked with a lower mass of the resulting products, which greatly facilitates the handling, workability and installation of the products for the end users.

Finally, based on the results from the Karsten tests as presented in Figures 20 and 21, it can be concluded that adding the autoclave-cured fiber cement waste powder in amounts of 20M% in replacement of cement or filler material does not have an effect on the water absorption as compared to reference samples not containing any comminuted fiber cement waste powder. The best results are obtained when the samples are pressed.
Adding the autoclave-cured fiber cement waste powder in higher amounts of for instance 30M% or 40 M% in replacement of cement or filler material results however in an increase in water absorption as compared to reference samples not containing any comminuted fiber cement waste powder.

Thus, from the above, it can be concluded that fiber cement products comprising from 15M% to 40M% of comminuted fiber cement waste powder as produced by the methods of the present invention comprising the step of pressing before the curing step, perform comparable to fiber cement products not comprising any comminuted waste powder and perform significantly better than unpressed fiber cement products containing the same amounts of comminuted waste.

### Example 8: Production of autoclave-cured fiber cement products comprising from 10M% to 30M% of air-cured comminuted fiber cement powder as produced according to the methods of the invention

The air-cured fiber cement waste powder, obtained as described in Example 1, was used to produce autoclave-cured Cedral fiber cement products and Tectiva fiber cement products
A series of 6 test slurry samples was produced (see Table 5 below: samples 33, 34, 35, 37, 38 and 39), wherein at least part or all of the siliceous source (i.e. quartz), or at least part of the cement, or part of both the siliceous source (i.e. quartz) and the cement, was replaced by the comminuted air-cured fiber cement powder as obtained using the comminuting method explained in Example 1. In addition, 2 reference slurry samples (see Table 5 below: samples 32 and 36) were produced, not containing any air-cured comminuted waste powder.

As such, the following 8 fiber cement slurry formulations were obtained:

**Table 5 - FC formulations M% samples 32 to 39 (PVA: polyvinylalcohol fiber Kuraray A8; Cellulose: Solombala UKP 60°SR; Condensed silica fume: EMSAC 500S Elkem Materials Ltd.; CaCO₃ filler: Calcitec 2001S, Carmeuse SA; Cement: CEMI 42.5N, CBR SA, Lixhe)**

| | 32 | 33 | 34 | 35 | 36 | 37 | 38 | 39 |
|---|---|---|---|---|---|---|---|---|
| Cellulose | 7,7 | 7,7 | 7,7 | 7,7 | 7,7 | 7,7 | 7,7 | 7,7 |
| Ca-Silicate | 0,0 | 0,0 | 0,0 | 0,0 | 6,0 | 6,0 | 6,0 | 6,0 |
| CaCO₃ filler | 0,0 | 0,0 | 0,0 | 0,0 | 4,0 | 4,0 | 4,0 | 4,0 |
| Quartz | 50,3 | 44,3 | 38,3 | 32,3 | 39,0 | 33,0 | 27,0 | 21,0 |
| Pigment | 4,0 | 4,0 | 4,0 | 4,0 | 4,0 | 4,0 | 4,0 | 4,0 |
| Kaolin | 0,0 | 0,0 | 0,0 | 0,0 | 4,0 | 4,0 | 4,0 | 4,0 |
| Cement | 38,0 | 34,0 | 30,0 | 26,0 | 35,3 | 31,3 | 27,3 | 23,3 |
| FC waste Cedral | 0,0 | 10,0 | 20,0 | 30,0 | 0,0 | 0,0 | 0,0 | 0,0 |
| FC waste Tectiva | 0,0 | 0,0 | 0,0 | 0,0 | 0,0 | 10,0 | 20,0 | 30,0 |
| Total | 100,00 | 100,00 | 100,00 | 100,00 | 100,00 | 100,00 | 100,00 | 100,00 |

The fiber cement slurry formulations as presented in Table 5 were used to provide green sheets of fiber cement on a state of the art Hatschek production machine. The green sheets were pressed at 230 kg/cm² and autoclave-cured.
The autoclave-cured sheets were subsequently cut into appropriate dimensions and coated, to provide Cedral samples and Tectiva samples as produced and obtainable from Eternit N.V.

The formed autoclave-cured sheets were analyzed for their physico-mechanical characteristics, i.e. modulus of rupture (MOR). The modulus of rupture (MOR; expressed in Pa= kg/m.s²) was measured by making use of a UTS/INSTRON apparatus (type 3345; cel=5000N).
The density of the samples was measured by first saturating the samples during 72 hours in tap water. The weight of the samples was subsequently determined both under saturated and immersed conditions. Afterwards, the samples were placed to dry for 48 hours at about 105°C. For each of the dried samples, the weight was determined again. The density (X) for each sample was calculated by dividing the dry weight (C) by the difference between the immersed weight (B) and the saturated weight (A), according to the following formula: X = C/(A-B).
Finally, the water absorption as measured by a Karsten test was determined. The test was performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).
For each of the air-dried and water-saturated samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

The results are presented in Figures 22 to 24.
As can be derived from the graph in Figure 22, which represents the density normalized flexural strength (modulus of rupture; MOR) of the 6 different test samples (33, 34, 35, 37, 38 and 39 of which the formulation is presented in Table 5) and the two reference samples (32 and 36 of which the formulation is presented in Table 5), it can be concluded that the density normalized flexural strength or modulus of rupture (MOR/d²) is higher in the test samples as compared to the reference samples. This means that the samples comprising the air-cured comminuted fiber cement waste powder in amounts of between 10M% and 30M% as produced according to the methods of the present invention have a higher strength with reference samples not containing any waste powder.

Furthermore, for both the Cedral fiber cement sidings as well as the Tectiva fiber cement boards, it can be concluded that the hydric movement is not significantly different from the references (see Figure 23). This is a very remarkable results, especially given the fact that the water absorption is higher in the test samples than in the references (see Figure 24).

Finally, it was determined that the density of the test samples was significantly lower as compared to the reference samples not containing any waste powder (data not shown).

Thus, from the above, it can be concluded that autoclave-cured fiber cement products comprising from 10M% to 30M% of air-cured comminuted fiber cement waste powder as produced by the methods of the present invention perform better than the reference fiber cement products not comprising any comminuted waste powder.

From the pictures of the autoclaved products manufactured as described in the present examples, it can be seen that the autoclave-cured products contain air-cured fiber cement waste. Indeed, only air-cured material typically contains PVA fibers, which PVA fibers are also present in the recycled autoclave-cured products produced according to the methods of the invention (see Figure 25) but which are not present in fresh autoclave-cured products.
From the pictures of the air-cured products manufactured as described in the present examples, it can be seen that these products contain autoclave-cured fiber cement waste. Indeed, only autoclave-cured material typically contains white quartz particles, which quartz particles are also present in the recycled air-cured products produced according to the methods of the invention (see Figure 26) but which are not present in fresh air-cured products (see Figure 27).

It is to be understood that although preferred embodiments and/or materials have been discussed for providing embodiments according to the present invention, various modifications or changes may be made without departing from the scope and spirit of this invention.

## Claims

1. A method for the production of comminuted cured fiber cement material, comprising at least the step of comminuting cured fiber cement material using a pendular mill.

2. A method according to any of claim 1, wherein the cured fiber cement material has a water content of less than or equal to about 10%w as measured prior to the step of comminuting.

3. A method according to any one of claims 1 or 2, wherein said cured fiber cement material is air-cured fiber cement material or autoclave-cured fiber cement material.

4. A cured fiber cement powder obtained by comminuting cured fiber cement material according to the method of any one of claims 1 to 3.

5. A cured fiber cement powder according to claim 4, where in the powder has a bulk density of between about 1000 kg/m³ and about 1300 kg/m³.

6. A method for the production of fiber cement products comprising recycled cured fiber cement powder, the method comprising:
(a) providing cured fiber cement powder obtained by comminuting cured fiber cement material according to the method of any one of claims 1 to 3;
(b) providing a fiber cement slurry by mixing at least said cured fiber cement powder, cement, water and fibers being synthetic organic fibers, natural organic fibers and/or synthetic inorganic fibers;
(c) shaping the fiber cement slurry into an uncured fiber cement product, and
(d) curing the uncured fiber cement product.

7. The method according to claim 6, wherein said fiber cement slurry comprises at least between about 5M% and about 40M% of cured fiber cement powder.

8. The method according to claim 7, wherein the fiber cement product is made via the Hatschek process.

9. The method according to claims 7 or 8, wherein the cured fiber cement powder comprises air-cured fiber cement powder.

10. The method according to any one of claims 7 or 8, wherein the cured fiber cement powder comprises autoclave-cured fiber cement powder.

11. The method according to any one of claims 6 to 10, wherein step (d) of curing the uncured fiber cement product comprises air-curing the uncured fiber cement product.

12. The method according to any of the claims 6 to 10, wherein step (d) of curing the uncured fiber cement product comprises autoclave-curing the uncured fiber cement product.

13. A fiber cement product obtained using a method according to any one of claims 6 to 12.

14. The fiber cement product according to claim 13, which is an air-cured fiber cement product.

15. The fiber cement product according to claim 13, which is an autoclave-cured fiber cement product.
